(19) Europäisches Patentamt
European Patent Office
Office européen des brevets

(11) EP 3 575 826 B1

(12) # EUROPEAN PATENT SPECIFICATION

(45) Date of publication and mention of the grant of the patent:
**11.08.2021 Bulletin 2021/32**

(21) Application number: **18744816.2**

(22) Date of filing: **10.01.2018**

(51) Int Cl.:
***G01S 7/526*** *(2006.01)*
***H04R 1/00*** *(2006.01)*
***H04R 3/00*** *(2006.01)*
***H04R 29/00*** *(2006.01)*
***B06B 1/02*** *(2006.01)*
***G01H 11/08*** *(2006.01)*

(86) International application number:
**PCT/JP2018/000271**

(87) International publication number:
**WO 2018/139194 (02.08.2018 Gazette 2018/31)**

(54) **ULTRASONIC DEVICE WITH CAPACITANCE MEASURING CIRCUIT**

ULTRASCHALLVORRICHTUNG MIT KAPAZITÄTSMESSUNGSSCHALTUNG

DISPOSITIF ULTRASONORE AVEC UN CIRCUIT DE MESURE DE LA CAPACITÉ ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2017 JP 2017011458**

(43) Date of publication of application:
**04.12.2019 Bulletin 2019/49**

(73) Proprietor: **Murata Manufacturing Co., Ltd.**
**Nagaokakyo-shi, Kyoto 617-8555 (JP)**

(72) Inventors:
- **NAKAO, Motoyasu**
  **Nagaokakyo-shi, Kyoto 617-8555 (JP)**
- **WATANABE, Kosuke**
  **Nagaokakyo-shi, Kyoto 617-8555 (JP)**

(74) Representative: **Reeve, Nicholas Edward**
**Reddie & Grose LLP**
**The White Chapel Building**
**10 Whitechapel High Street**
**London E1 8QS (GB)**

(56) References cited:
**WO-A1-2016/167003**
**WO-A1-2016/167003**
**DE-A1- 3 538 964**
**JP-A- H11 150 959**
**JP-A- H11 150 959**
**JP-A- S61 270 685**
**JP-A- S61 270 685**
**JP-A- 2012 049 789**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an ultrasonic apparatus, and particularly relates to a technique for measuring the electrostatic capacitance of a three-terminal ultrasonic transducer that includes a transmitting electrode and a receiving electrode independent of each other.

### Background Art

Ultrasonic apparatuses are used in practice, in which an ultrasonic transducer transmits ultrasonic waves, receives reflected waves from an object to be detected, and thereby measures, for example, a distance to the object to be detected.

Since the speed of ultrasonic waves is affected by ambient temperature, temperature compensation is required to accurately measure the distance to the object to be detected.

Japanese Unexamined Patent Application Publication No. 61-270685 discloses an ultrasonic sensor that measures the electrostatic capacitance of an ultrasonic vibrator and performs temperature compensation using a relation between the electrostatic capacitance of the ultrasonic vibrator and temperature.

Japanese Unexamined Patent Application Publication No. 2012-217012 discloses an electronic apparatus that is allowed to be controlled in accordance with internal temperature thereof.

The ultrasonic sensor (ultrasonic transducer) disclosed in Japanese Unexamined Patent Application Publication No. 61-270685 is a so-called two-terminal ultrasonic transducer in which a transmitting vibrator (transmitting electrode) for transmitting ultrasonic waves and a receiving vibrator (receiving electrode) for receiving reflected waves are combined. Measuring the electrostatic capacitance of such a two-terminal ultrasonic transducer requires a switch for switching between a transmitting and receiving circuit and an electrostatic capacitance measuring circuit, so as to eliminate the influence of the capacitive component of the transmitting and receiving circuit.

Generally, for transmitting ultrasonic waves far away, some ultrasonic transducers employ a technique that boosts the voltage of a transmit signal. When, as in Japanese Unexamined Patent Application Publication No. 61-270685 a switch is used for switching between the transmitting and receiving circuit and the capacitance measuring circuit, the breakdown voltage specification of the switch is determined by the voltage of a transmitting circuit having a higher voltage. This increases the size of the switch to be used, and leads to increased component cost.

WO2016/167003 discloses an ultrasonic sensor including: a flat-plate-shaped piezoelectric body, which includes a transmission region for an ultrasonic wave and a reception region for a reflected wave of the ultrasonic wave; a common electrode that is provided in the transmission region and the reception region; a transmission electrode that is provided in the transmission region; a reception electrode that is provided in the reception region; a semiconductor element that is electrically connected to the transmission electrode and the reception electrode; and a semiconductor element that is electrically connected to the transmission electrode and the reception electrode and switches a path between a conductive state and a non-conductive state. The semiconductor element puts the path into the conductive state after application of the alternating-current voltage is stopped, and as a result, a reverberation signal, which is output from the reception region in accordance with a reverberant vibration of the ultrasonic wave, is fed back to the transmission electrode.

JPH11150959 discloses a measuring circuit that measures the specified impedance value of a piezoelectric element which changes with the temperature of this piezoelectric element. On receiving a measured result from the measuring circuit, a correcting circuit corrects a driving frequency for a piezoelectric vibrator, on the basis of an impedance value of the measured result. Namely, the correcting circuit corrects the driving frequency for the piezoelectric vibrator in accordance with the temperature change, on the basis of the precise temperature of the piezoelectric element. And, a drive circuit generates an AC signal of the drive frequency corrected according to the temperature and supplies it to the piezoelectric vibrator, and drives the piezoelectric vibrator.

JPS61270685 discloses an ultrasonic switch which is used for object detection, distance detection, and the like, and which has a temperature compensation function.

DE3538964 discloses a transducer device having a frequency characteristic that accounts for fluctuating ambient temperatures.

The present invention has been made in view of the problems described above. We have appreciated that it would be desirable to improve the measurement accuracy of the ultrasonic apparatus in measuring the electrostatic capacitance of the ultrasonic transducer, and at the same time reduce the cost of manufacturing the ultrasonic apparatus.

## SUMMARY OF THE INVENTION

An ultrasonic apparatus according to the present invention includes an ultrasonic transducer, a transmitting circuit, a receiving circuit, and a capacitance measuring circuit. The ultrasonic transducer is a so-called three-terminal ultrasonic transducer that includes a common electrode, a transmitting electrode, and a receiving electrode independent of the transmitting electrode. The transmitting circuit outputs a driving signal to the transmitting electrode to cause the ultrasonic transducer to transmit ultrasonic waves. The receiving circuit receives a receive signal from the receiving electrode. The capacitance measuring circuit is electrically connected to the receiving electrode to measure the electrostatic capacitance of the ultrasonic transducer.

The capacitance measuring circuit additionally includes an alternating-current signal generating circuit, a reference capacitor connected between the alternating-current signal generating circuit and the receiving electrode, an amplitude measuring circuit, and a capacitance calculating circuit. The alternating-current signal generating circuit generates an alternating-current signal of a reference amplitude having a frequency different from a resonant frequency of the ultrasonic transducer. The amplitude measuring circuit measures the voltage amplitude of the alternating-current signal at the receiving electrode. The capacitance calculating circuit calculates the electrostatic capacitance of the ultrasonic transducer.

The capacitance measuring circuit further includes a switching device configured to enable switching between a first state and a second state, the first state being a state where the alternating-current signal generating circuit and the amplitude measuring circuit are connected without interposition of the reference capacitor, the second state being a state where the alternating-current signal generating circuit and the amplitude measuring circuit are connected with the reference capacitor interposed therebetween. The capacitance calculating circuit calculates the electrostatic capacitance of the ultrasonic transducer on the basis of an amplitude measured in the first state by the amplitude measuring circuit and an amplitude measured in the second state by the amplitude measuring circuit.

The ultrasonic apparatus optionally further includes a receive switching unit configured to connect the receiving electrode to either the receiving circuit or to the capacitance measuring circuit.

The ultrasonic apparatus optionally further includes a ground switching unit configured to ground the transmitting electrode when the capacitance measuring circuit measures the electrostatic capacitance.

The switching device optionally includes first to third switching units. The first switching unit enables and disables conduction between the alternating-current signal generating circuit and the reference capacitor. The second switching unit enables and disables conduction between the receiving electrode and the amplitude measuring circuit. The third switching unit is connected at one end thereof to a first node between the alternating-current signal generating circuit and the first switching unit, and connected at the other end thereof to a second node between the amplitude measuring circuit and the second switching unit. The third switching unit enables and disables conduction between the first node and the second node. In the first state, the first switching unit and the second switching unit are brought out of conduction, whereas the third switching unit is brought into conduction. In the second state, the first switching unit and the second switching unit are brought into conduction, whereas the third switching unit is brought out of conduction.

The ultrasonic apparatus optionally further includes a temperature estimating circuit configured to estimate a temperature of the ultrasonic transducer on the basis of a measured electrostatic capacitance of the ultrasonic transducer and a predetermined correlation between electrostatic capacitance and temperature.

The ultrasonic apparatus according to the present invention employs a three-terminal ultrasonic transducer including a transmitting electrode and a receiving electrode independent of each other, and connects a circuit for electrostatic capacitance measurement to the receiving electrode to measure the electrostatic capacitance of the ultrasonic transducer. This can reduce the influence of the impedance of the transmitting circuit on the measurement of the electrostatic capacitance of the ultrasonic transducer. By connecting a capacitance measuring circuit to the receiving electrode, the breakdown voltage of the circuit for electrostatic capacitance measurement can be made lower than that when connecting it to the transmitting side. It is thus possible to improve accuracy in measuring the electrostatic capacitance of the ultrasonic transducer, and at the same time reduce the cost of manufacture.

## BRIEF DESCRIPTION OF DRAWINGS

Fig. 1 is a block diagram illustrating a general configuration of an ultrasonic apparatus according to a first embodiment.
Fig. 2 is a graph showing a relation between temperature and electrostatic capacitance of an ultrasonic transducer.
Fig. 3 is a diagram illustrating a first example of a transmitting circuit illustrated in Fig. 1.
Fig. 4 is a diagram illustrating a second example of the transmitting circuit illustrated in Fig. 1.
Fig. 5 is a diagram illustrating details of a capacitance measuring circuit illustrated in Fig. 1.
Fig. 6 is a diagram for explaining how the electrostatic capacitance of the ultrasonic transducer is calculated in a capacitance calculating circuit.

Fig. 7 is a diagram illustrating a modification of the ultrasonic apparatus.

Fig. 8 is a diagram illustrating the capacitance measuring circuit.

Fig. 9 is a flowchart of an electrostatic capacitance calculating process performed in Fig. 8.

Fig. 10 is a block diagram illustrating a general configuration of an ultrasonic apparatus according to a second embodiment.

Fig. 11 is a diagram illustrating a transmitting circuit illustrated in Fig. 10.

DESCRIPTION OF EMBODIMENTS

Embodiments of the present invention will now be described in detail with reference to the drawings. The same or equivalent parts throughout the drawings are denoted by the same reference numerals and their description will not be repeated.

First Embodiment

Fig. 1 is a block diagram illustrating a general configuration of an ultrasonic apparatus 100 according to a first embodiment. Referring to Fig. 1, the ultrasonic apparatus 100 includes a transmitting circuit 110, an ultrasonic transducer 120, an amplifier 130, a receiving circuit 140, a capacitance measuring circuit 150, and a temperature estimating circuit 160.

The transmitting circuit 110 is a circuit for transmitting ultrasonic waves from the ultrasonic transducer 120 by driving the ultrasonic transducer 120. The transmitting circuit 110 includes a memory 112, a control circuit 114, and a signal generating circuit 116. The control circuit 114 reads data stored in the memory 112 and outputs, to the signal generating circuit 116, a control signal DRV suitable for driving the ultrasonic transducer 120. On the basis of the control signal DRV output from the control circuit 114, the signal generating circuit 116 generates an alternating-current voltage (ultrasonic pulse: transmit signal) from a direct-current voltage. The signal generating circuit 116 amplifies the generated alternating-current voltage as appropriate, and supplies the amplified alternating-current voltage to the ultrasonic transducer 120. The configuration of the signal generating circuit 116 will be described in detail later on.

The ultrasonic transducer 120 is a so-called three-terminal ultrasonic transducer that includes a transmitting electrode 121 (terminal TX), a receiving electrode 122 (terminal RX), a common electrode 123 (terminal COM), and a piezoelectric body 124. The transmitting electrode 121 and the common electrode 123 are connected to the signal generating circuit 116 of the transmitting circuit 110. The receiving electrode 122 is connected to the capacitance measuring circuit 150, and is at the same time connected to the receiving circuit 140, with the amplifier 130 interposed therebetween.

The piezoelectric body 124 includes a transmitting region 124A for transmitting ultrasonic waves, and a receiving region 124B for receiving reflected ultrasonic waves. The transmitting electrode 121 is disposed opposite the common electrode 123, with the transmitting region 124A of the piezoelectric body 124 interposed therebetween, and is electrically connected to the transmitting region 124A. The receiving electrode 122 is disposed opposite the common electrode 123, with the receiving region 124B of the piezoelectric body 124 interposed therebetween, and is electrically connected to the receiving region 124B. The common electrode 123 is electrically connected to both the transmitting region 124A and the receiving region 124B.

The transmitting electrode 121 receives a transmit signal from the signal generating circuit 116. In response to the transmit signal, the transmitting region 124A of the piezoelectric body 124 vibrates together with a housing of the ultrasonic transducer, and thereby transmits ultrasonic waves, for example, into the air.

The ultrasonic waves transmitted from the transmitting electrode 121 are reflected by an object. The receiving electrode 122 receives the reflected waves from the object and vibrates. The receiving region 124B of the piezoelectric body 124 converts the vibration of the transmitting electrode 121 into an electric signal, and outputs the electric signal as a receive signal to the amplifier 130 and to the capacitance measuring circuit 150.

The amplifier 130 is, for example, an inverting amplifier circuit that includes a resistor and an operational amplifier (neither of which are shown). The amplifier 130 amplifies the receive signal from the transmitting electrode 121 and outputs it to the receiving circuit 140.

The receiving circuit 140 receives the receive signal amplified by the amplifier 130. The receiving circuit 140 detects the voltage value of the receive signal, and outputs a detected value RCV to the control circuit 114.

The capacitance measuring circuit 150 measures an electrostatic capacitance CSNS of the ultrasonic transducer 120 (as described below). The measured electrostatic capacitance CSNS is output to the temperature estimating circuit 160.

On the basis of the electrostatic capacitance CSNS measured by the capacitance measuring circuit 150, the temperature estimating circuit 160 estimates a temperature Temp of the ultrasonic transducer 120 from a relation between temperature and electrostatic capacitance (such as that shown in Fig. 2) determined in advance, for example, by experiment. The estimated temperature Temp is output to the control circuit 114. Although the temperature estimating circuit 160 in Fig. 1 is illustrated as a circuit independent of the control circuit 114, the function of the temperature estimating circuit 160 may be included in the control circuit 114.

On the basis of the detected value RCV from the receiving circuit 140, the control circuit 114 identifies information about the presence and movement of an object and the distance to the object. On the basis of the temperature Temp of the ultrasonic transducer 120 estimated by the temperature estimating circuit 160, the control circuit 114 performs temperature compensation control, such as correction of the detected distance or adjustment of the control signal DRV. The ultrasonic apparatus 100 can be used, for example, as an ultrasonic sensor mounted on a vehicle.

As described above, the temperature of the ultrasonic transducer 120 is estimated on the basis of the electrostatic capacitance of the ultrasonic transducer 120. This eliminates the need for addition of a temperature sensor for temperature detection. On the other hand, whether the temperature compensation control is properly performed is dependent on the accuracy of the estimated temperature of the ultrasonic transducer 120. Therefore, it is necessary to accurately measure the electrostatic capacitance of the ultrasonic transducer 120.

Accordingly, in the present embodiment, the three-terminal ultrasonic transducer 120 including the transmitting electrode 121 and the receiving electrode 122, which are separated, is employed as the ultrasonic transducer, and the receiving electrode 122 is provided with the capacitance measuring circuit 150. This configuration can reduce the influence of the impedance of the transmitting circuit 110 on the measurement of the electrostatic capacitance CSNS of the ultrasonic transducer 120, and thus can improve accuracy in measuring the electrostatic capacitance of the ultrasonic transducer 120.

The capacitance measuring circuit 150 may be connected to the transmitting electrode 121 to reduce the influence of the impedance of the receiving-side circuit. However, for transmitting a transmit signal as far away as possible, the transmitting circuit 110 may employ a technique that boosts the voltage of the transmit signal. In this case, the breakdown voltage level of an element forming the capacitance measuring circuit 150 is required to be as high as the voltage level of the transmitting circuit 110. Therefore, to reduce circuit size and cost, it is more preferable that the capacitance measuring circuit 150 be connected to the receiving electrode 122.

Fig. 3 is a diagram for explaining details of the transmitting circuit 110 illustrated in Fig. 1. Referring to Fig. 3, the signal generating circuit 116 includes a positive power supply Vtx+, a negative power supply Vtx-, and switching elements (switching units) SW1 and SW2. The switching elements SW1 and SW2 are connected in series between the positive power supply Vtx+ and the negative power supply Vtx- to form a so-called half-bridge circuit. A connection node between the switching element SW1 and the switching element SW2 is connected to the transmitting electrode 121 (TX) of the ultrasonic transducer 120. The switching elements SW1 and SW2 are controlled by the control signal DRV from the control circuit 114 and generate, from the direct-current positive power supply Vtx+ and negative power supply Vtx-, an alternating-current voltage (transmit signal) for driving the ultrasonic transducer 120. Specifically, by bringing the switching element SW1 into conduction and bringing the switching element SW2 out of conduction, a positive pulse is output to the ultrasonic transducer 120. Conversely, by bringing the switching element SW1 out of conduction and bringing the switching element SW2 into conduction, a negative pulse is output to the ultrasonic transducer 120.

The common electrode 123 (COM) of the ultrasonic transducer 120 is connected to a ground potential GND in the transmitting circuit 110.

Fig. 4 is a diagram illustrating another example of the transmitting circuit illustrated in Fig. 1. A transmitting circuit 110A illustrated in Fig. 4 differs from the transmitting circuit in Fig. 3 in that a signal generating circuit 116A forms a full-bridge circuit.

Referring to Fig. 4, the signal generating circuit 116A includes a direct-current power supply Vtx and switching elements (switching units) SW3 to SW6. The switching elements SW3 and SW4 are connected in series between the direct-current power supply Vtx and the ground potential GND. The switching elements SW5 and SW6 are also connected in series between the direct-current power supply Vtx and the ground potential GND. The switching elements SW3 to SW6 thus form a full-bridge circuit.

The transmitting electrode 121 (TX) of the ultrasonic transducer 120 is connected to a connection node between the switching element SW3 and the switching element SW4. The common electrode 123 (COM) of the ultrasonic transducer 120 is connected to a connection node between the switching element SW5 and the switching element SW6.

The switching elements SW3 to SW6 are controlled by the control signal DRV from the control circuit 114 and generate, from the direct-current power supply Vtx, an alternating-current voltage (transmit signal) for driving the ultrasonic transducer 120. Specifically, by bringing the switching elements SW3 and SW6 into conduction and bringing the switching elements SW4 and SW5 out of conduction, a positive pulse is output to the ultrasonic transducer 120. Conversely, by bringing the switching elements SW3 and SW6 out of conduction and bringing the switching elements SW4 and SW5 into conduction, a negative pulse is output to the ultrasonic transducer 120.

Next, with reference to Fig. 5 and Fig. 6, the capacitance measuring circuit 150 of Fig. 1 and a capacitance measuring technique will be described in detail.

Referring to Fig. 5, the capacitance measuring circuit 150 includes a reference capacitor CREF having a given capacitance, an alternating-current signal generating circuit 151, an alternating-current amplitude measuring circuit 152, and a capacitance calculating circuit 153.

The alternating-current signal generating circuit 151 is connected to the receiving electrode 122, with the reference capacitor CREF interposed therebetween. The alternating-current signal generating circuit 151 outputs an alternating-current voltage signal having a predetermined amplitude VAC.

The alternating-current amplitude measuring circuit 152 is connected to the receiving electrode 122 and measures the voltage amplitude of an alternating-current signal at the receiving electrode 122. A voltage amplitude VMEAS measured is output to the capacitance calculating circuit 153.

The capacitance calculating circuit 153 calculates the electrostatic capacitance CSNS of the ultrasonic transducer 120 from the reference capacitance CREF and the amplitude VAC stored in a storage unit (not shown) and the voltage amplitude VMEAS measured by the alternating-current amplitude measuring circuit 152. The calculated electrostatic capacitance CSNS is output to the temperature estimating circuit 160.

Fig. 6 is a diagram for explaining details of how the electrostatic capacitance CSNS of the ultrasonic transducer 120 is calculated in the capacitance calculating circuit 153. As illustrated in Fig. 6, when the electrostatic capacitance CSNS of the ultrasonic transducer 120 is measured, the reference capacitance CREF and the electrostatic capacitance CSNS of the ultrasonic transducer 120 form a circuit connected in series between the alternating-current power supply (alternating-current signal generating circuit 151) and the ground potential GND. The voltage amplitude VMEAS measured by the alternating-current amplitude measuring circuit 152 and the alternating-current voltage amplitude VAC output from the alternating-current signal generating circuit 151 thus satisfy the relation represented by the following equation (1).

Equation. 1

$$V_{MEAS} = \frac{\frac{1}{j\omega C_{SNS}}}{\frac{1}{j\omega C_{SNS}} + \frac{1}{j\omega C_{REF}}} \cdot V_{AC} = \frac{C_{REF}}{C_{SNS} + C_{REF}} \cdot V_{AC} \qquad \cdots (1)$$

By modifying the equation (1), the electrostatic capacitance CSNS of the ultrasonic transducer 120 can be calculated by the following equation (2) using the reference capacitance CREF, the alternating-current voltage amplitude VAC, and the voltage amplitude VMEAS measured.

Equation. 2

$$C_{SNS} = C_{REF} \cdot \left( \frac{V_{AC}}{V_{MEAS}} - 1 \right) \qquad \cdots (2)$$

When the electrostatic capacitance CSNS of the ultrasonic transducer 120 is measured in the capacitance measuring circuit 150 as described above, in an equivalent circuit, as indicated by a broken line in Fig. 6, an impedance Zs of a resonant circuit of the ultrasonic transducer 120 can be expressed as being connected in parallel to the electrostatic capacitance CSNS to be measured. When the impedance Zs is high, the impedance Zs has little influence on the voltage amplitude VMEAS measured in the alternating-current amplitude measuring circuit 152. When the impedance Zs is low, however, its influence on the voltage amplitude VMEAS cannot be ignored, and accuracy in measuring the calculated electrostatic capacitance CSNS may be degraded. The impedance Zs of the resonant circuit of the ultrasonic transducer 120 is lowered when the frequency of an applied signal becomes close to the resonant frequency of the resonant circuit. To prevent degradation of accuracy in measuring the electrostatic capacitance CSNS, it is necessary that the frequency of the alternating-current voltage signal output from the alternating-current signal generating circuit 151 be different from the resonant frequency of the ultrasonic transducer 120, and be set such that the impedance Zs of the resonant circuit of the ultrasonic transducer 120 is high. For example, when the resonant frequency of the ultrasonic transducer 120 is 50 kHz, the frequency of the alternating-current voltage signal output from the alternating-current signal generating circuit 151 is designed to be 10 kHz.

When the impedance of the amplifier 130 is designed to be sufficiently larger than the impedance of the electrostatic capacitance CSNS, there is no need to provide an element for switching in the measurement of the electrostatic capacitance CSNS of the ultrasonic transducer 120, and this can reduce component cost.

As described above, when a three-terminal ultrasonic transducer is used and the capacitance measuring circuit is connected to the receiving electrode to measure the electrostatic capacitance CSNS of the ultrasonic transducer, it is possible to reduce the influence of the impedance of the transmitting circuit and improve accuracy in measuring the electrostatic capacitance CSNS. This improves accuracy in estimating the temperature of the ultrasonic transducer, and enables proper temperature compensation.

Further operation of the capacitance measuring circuit in the ultrasonic apparatus 100 will now be described with reference to Fig. 8 and Fig. 9.

As illustrated in Fig. 6, a calculation in the capacitance measuring circuit 150 is made with respect to the voltage amplitude VAC of an alternating-current signal generated in the alternating-current signal generating circuit 151. Therefore, accuracy in measuring the electrostatic capacitance CSNS of the ultrasonic transducer 120 depends on the accuracy of the voltage amplitude VAC of the alternating-current signal generated in the alternating-current signal generating circuit 151. On the other hand, the voltage amplitude VAC of the alternating-current signal may change in accordance with the temperature characteristic, or variations in the characteristics, of the alternating-current signal generating circuit 151, and such change may affect accuracy in measuring the electrostatic capacitance CSNS.

Accordingly, to measure the electrostatic capacitance CSNS of the ultrasonic transducer 120, a capacitance measuring circuit 150A first measures and calibrates the voltage amplitude VAC of an alternating-current signal generated by the alternating-current signal generating circuit 151, and then measures the electrostatic capacitance CSNS using the technique illustrated in Fig. 6. Such calibration can eliminate the influence of change in the characteristic of the voltage amplitude VAC of the alternating-current signal, and thus can further improve accuracy in measuring the electrostatic capacitance CSNS of the ultrasonic transducer 120.

Fig. 8 is a block diagram of the capacitance measuring circuit 150A. The configuration illustrated in Fig. 8 is obtained by adding a switching device, formed by switching units (switching elements) SW11 to SW13, and an alternating-current amplitude storage unit 154, to the capacitance measuring circuit 150 of the first embodiment illustrated in Fig. 5. Of the elements illustrated in Fig. 8, the same ones as those illustrated in Fig. 5 will not be described again here.

Referring to Fig. 8, the switching element SW11, which is a first switching unit, is connected between the reference capacitor CREF and the alternating-current signal generating circuit 151, and enables and disables conduction between the reference capacitor CREF and the alternating-current signal generating circuit 151. The switching element SW12, which is a second switching unit, is connected between the receiving electrode 122 (RX) and the alternating-current amplitude measuring circuit 152, and enables and disables conduction between the receiving electrode 122 (RX) and the alternating-current amplitude measuring circuit 152.

The switching element SW13, which is a third switching unit, is connected at one end thereof to a connection node (first node) between the switching element SW11 and the alternating-current signal generating circuit 151. The switching element SW13 is connected at the other end thereof to a connection node (second node) between the switching element SW12 and the alternating-current amplitude measuring circuit 152. The switching element SW13 enables and disables conduction between the first node and the second node. The switching elements SW11 to SW13 are controlled, for example, by the control circuit 114 of the transmitting circuit 110.

For measurement of the electrostatic capacitance CSNS of the ultrasonic transducer 120, the switching elements SW11 and SW12 are first brought out of conduction and the switching element SW13 is brought into conduction (first state). In the first state, the alternating-current amplitude measuring circuit 152 measures a voltage amplitude, and thus the reference amplitude voltage VAC of an alternating-current signal output from the alternating-current signal generating circuit 151 is measured. That is, the alternating-current amplitude measuring circuit 152 measures the voltage amplitude of the alternating-current signal from the alternating-current signal generating circuit 151, through a path not having the reference capacitor CREF therein. The alternating-current amplitude measuring circuit 152 stores the detected value of the measured voltage amplitude VAC in the alternating-current amplitude storage unit 154.

Then, the switching elements SW11 and SW12 are brought into conduction and the switching element SW13 is brought out of conduction (second state). Thus, the alternating-current amplitude measuring circuit 152 measures the voltage amplitude of the alternating-current signal transmitted thereto from the alternating-current signal generating circuit 151 through the reference capacitor CREF. In this state, which is the same as that of the circuit illustrated in Fig. 5, the alternating-current amplitude measuring circuit 152 measures the voltage amplitude VMEAS determined by the reference capacitance CREF and the electrostatic capacitance CSNS of the ultrasonic transducer 120.

The capacitance calculating circuit 153 calculates the electrostatic capacitance CSNS of the ultrasonic transducer 120 from the equation (2) on the basis of the reference amplitude voltage VAC measured in the first state and stored in the alternating-current amplitude storage unit 154, the voltage amplitude VMEAS measured in the second state, and the reference capacitance CREF.

Fig. 9 is a flowchart for explaining details of the process for calculating the electrostatic capacitance CSNS of the ultrasonic transducer 120 described with reference to Fig. 8. The process of the flowchart of Fig. 9 is performed by the control circuit 114, and each circuit operates in accordance with a control signal from the control circuit 114. Each circuit may operate autonomously, or may be operated by a different control device (not shown).

Referring to Fig. 9, when the timing for measuring the electrostatic capacitance CSNS of the ultrasonic transducer 120 is reached, the control circuit 114 brings the switching elements SW11 and SW12 in the capacitance measuring circuit 150A out of conduction (i.e., turns SW11 and SW12 OFF) and brings the switching element SW13 into conduction (i.e., turns SW13 ON), so that the first state is entered in step 100 (hereinafter, "step" will be abbreviated as "S"). Then, in S110, in this state, the control circuit 114 causes the alternating-current signal generating circuit 151 to output an alternating-current signal and causes the alternating-current amplitude measuring circuit 152 to measure the amplitude voltage at this point. The control circuit 114 stores the measured amplitude voltage in the alternating-current amplitude storage unit 154 as the reference amplitude voltage VAC.

Then, in S120, the control circuit 114 brings the switching elements SW11 and SW12 into conduction (i.e., turns SW11 and SW12 ON) and brings the switching element SW13 out of conduction (i.e., turns SW13 OFF), so that the second state is entered. Then in S130, the control circuit 114 causes the alternating-current signal generating circuit 151 to output an alternating-current signal and causes the alternating-current amplitude measuring circuit 152 to measure the voltage amplitude VMEAS in the second state.

In S140, the control circuit 114 causes the capacitance calculating circuit 153 to calculate the electrostatic capacitance CSNS on the basis of the voltage amplitude VMEAS measured in S130, the reference amplitude voltage VAC stored in S110, and the reference capacitance CREF.

By carrying out control in accordance with the process described above, it is possible to eliminate the influence of change in the characteristic of the voltage amplitude VAC of the alternating-current signal generated by the alternating-current signal generating circuit 151. Accuracy in measuring the electrostatic capacitance CSNS of the ultrasonic transducer 120 can thus be further improved.

## First Modification

In the ultrasonic apparatus 100 illustrated in Fig. 1, when the impedance of the amplifier 130 is designed to be sufficiently larger than the impedance of the electrostatic capacitance CSNS, even when the amplifier 130 and the capacitance measuring circuit 150 are in an electrically connected state during measurement of the electrostatic capacitance CSNS of the ultrasonic transducer 120 performed in the capacitance measuring circuit 150, the amplifier 130 has little influence on the electrostatic capacitance CSNS. However, if the impedance of the amplifier 130 cannot be made sufficiently high, accuracy in measuring the electrostatic capacitance CSNS of the ultrasonic transducer 120 may be degraded by the influence of the impedance of the amplifier 130.

Accordingly, an ultrasonic apparatus 100A according to the present modification employs a configuration obtained by adding a receive switching unit SW10 to the ultrasonic apparatus 100 illustrated in Fig. 1. The receive switching unit SW10 is configured to connect the amplifier 130 and the receiving circuit 140 to the receiving electrode 122, or connect the capacitance measuring circuit 150 to the receiving electrode 122. Of the elements illustrated in Fig. 7, the same ones as those illustrated in Fig. 1 will not be described again here.

Fig. 7 is a diagram illustrating a modification of the ultrasonic apparatus according to the first embodiment. Referring to Fig. 7, the receive switching unit SW10 includes an input terminal and first and second output terminals. The receiving electrode 122 is connected to the input terminal and the amplifier 130 is connected to the first output terminal. The capacitance measuring circuit 150 is connected to the second output terminal.

For detecting the presence of, or distance to, an object on the basis of reflected waves received by the receiving electrode 122, the receive switching unit SW10 connects the input terminal to the first output terminal. On the other hand, for measuring the electrostatic capacitance CSNS of the ultrasonic transducer 120, the receive switching unit SW10 connects the input terminal to the second output terminal. Thus, during measurement of the electrostatic capacitance CSNS of the ultrasonic transducer 120, the amplifier 130 and the receiving circuit 140 are electrically isolated from the capacitance measuring circuit 150. This eliminates the influence of the impedance of the amplifier 130, and further improves accuracy in measuring the electrostatic capacitance CSNS of the ultrasonic transducer 120.

Since the receive switching unit SW10 is connected to the receiving electrode 122, the breakdown voltage of the receive switching unit SW10 can be made lower than that of the switch used for switching in the measurement of capacitance, described in Japanese Unexamined Patent Application Publication No. 61-270685. This makes it possible to reduce component cost.

## Second Embodiment

When a three-terminal ultrasonic transducer is used as in the first embodiment, the influence of the impedance of the transmitting circuit 110 can be reduced to a certain extent. However, when the impedance of the transmitting circuit 110 varies, the measured electrostatic capacitance value may also vary.

A second embodiment provides a configuration in which, when the electrostatic capacitance of the ultrasonic transducer is measured in the capacitance measuring circuit 150 on the receiving side, the transmitting electrode 121 is grounded so as to fix the impedance of the transmitting circuit 110 and stabilize the measurement of electrostatic capacitance.

Fig. 10 is an overall block diagram of an ultrasonic apparatus 100# according to the second embodiment. In Fig. 10, a transmitting circuit 110# replaces the transmitting circuit 110 of the first embodiment illustrated in Fig. 1. The transmitting circuit 110# includes a ground switching unit (switching element) SW7, as well as the components of the transmitting circuit 110 illustrated in Fig. 1. The switching element SW7 is capable of enabling and disabling conduction between the transmitting electrode 121 and the ground potential GND. When the capacitance measuring circuit 150 measures the electrostatic capacitance of the ultrasonic transducer, the switching element SW7 is brought into conduction to connect the transmitting electrode 121 to the ground potential GND.

Fig. 11 is a diagram corresponding to Fig. 3 of the first embodiment. Fig. 11 illustrates the transmitting circuit 110# in which the signal generating circuit 116 is formed as a half-bridge circuit. In the transmitting circuit 110#, the switching element SW7 is electrically connected at one end thereof to a connection node between the switching element SW1 and the switching element SW2 (i.e., to the transmitting electrode 121), and connected at the other end thereof to the ground potential GND. The switching element SW7 is driven by the control circuit 114 and brought into conduction when the electrostatic capacitance of the ultrasonic transducer is measured in the capacitance measuring circuit 150.

The impedance between TX and COM is thus short-circuited and fixed. This makes it possible to eliminate the influence of variation in the impedance of the transmitting circuit on the measured capacitance value.

While not shown, if the signal generating circuit 116 is formed as a full-bridge circuit, the influence of the impedance of the circuit on the transmitting side can be eliminated in the same manner as in Fig. 11, without requiring the switching element SW7. More specifically, since TX and COM can be short-circuited by bringing the switching element SW4 into conduction in Fig. 4, there is no need to add the switching element SW7.

As described above, a three-terminal ultrasonic transducer is used, a capacitance measuring circuit is connected to the receiving electrode of the ultrasonic transducer to measure the electrostatic capacitance of the ultrasonic transducer, and the transmitting electrode is grounded when the electrostatic capacitance is measured. Thus, the influence of the impedance of the transmitting circuit can be eliminated. This further improves accuracy in measuring the electrostatic capacitance, and enables proper temperature compensation of the ultrasonic transducer.

The second embodiment is also applicable to the modifications of the first embodiment.

The embodiments disclosed herein should be considered illustrative, not restrictive, in all aspects. The scope of the present invention is defined by the appended claims, not by the explanation described above. All changes made within the appended claims are intended to be embraced by the present invention.

Reference Signs List

100, 100A, 100#: ultrasonic apparatus, 110, 110A, 110#: transmitting circuit, 112: memory, 114: control circuit, 116, 116A: signal generating circuit, 120: ultrasonic transducer, 121: transmitting electrode, 122: receiving electrode, 123: common electrode, 124: piezoelectric body, 124A: transmitting region, 124B: receiving region, 130: amplifier, 140: receiving circuit, 150, 150A: capacitance measuring circuit, 151: alternating-current signal generating circuit, 152: alternating-current amplitude measuring circuit, 153: capacitance calculating circuit, 154: alternating-current amplitude storage unit, 160: temperature estimating circuit, COM, RX, TX: terminal, CREF: reference capacitor, SW1 to SW7, SW11 to SW13: switching element, SW10: receive switching unit, Vtx, Vtx+, Vtx-: power supply, Zs: impedance.

## Claims

**1.** An ultrasonic apparatus (100) comprising:

a three-terminal ultrasonic transducer (120) including a common electrode (123), a transmitting electrode (121), and a receiving electrode (122) independent of the transmitting electrode (121);
a transmitting circuit (110) configured to output a driving signal to the transmitting electrode (121) to cause the ultrasonic transducer (120) to transmit ultrasonic waves;
a receiving circuit (140) configured to receive a receive signal from the receiving electrode (122); and
a capacitance measuring circuit (150) electrically connected to the receiving electrode (122) to measure an electrostatic capacitance of the ultrasonic transducer (120), **characterized in that** the capacitance measuring circuit (150) includes
an alternating-current signal generating circuit (151) configured to generate an alternating-current signal of a reference amplitude having a frequency different from a resonant frequency of the ultrasonic transducer (120),
a reference capacitor (Cref) connected between the alternating-current signal generating circuit (151) and the receiving electrode (122),
an amplitude measuring circuit (152) configured to measure the voltage amplitude of the alternating-current signal at the receiving electrode (122),

a capacitance calculating circuit (153) configured to calculate the electrostatic capacitance of the ultrasonic transducer (120)
a switching device (SW13) configured to enable switching between a first state and a second state, the first state being a state where the alternating-current signal generating circuit (151) and the amplitude measuring circuit (152) are connected without interposition of the reference capacitor (Cref), the second state being a state where the alternating-current signal generating circuit (151) and the amplitude measuring circuit (152) are connected with the reference capacitor (Cref) interposed therebetween; and
the capacitance calculating circuit (153) is configured to calculate the electrostatic capacitance of the ultrasonic transducer on the basis of an amplitude measured in the first state by the amplitude measuring circuit (152) and an amplitude measured in the second state by the amplitude measuring circuit (152).

**2.** The ultrasonic apparatus according to claim 1, further comprising a receive switching unit (SW10) configured to connect the receiving electrode (122) to either the receiving circuit (140) or to the capacitance measuring circuit (150).

**3.** The ultrasonic apparatus according to claim 1 or 2, further comprising a ground switching unit (SW4) configured to ground the transmitting electrode (121) when the capacitance measuring circuit (150) measures the electrostatic capacitance.

**4.** The ultrasonic apparatus according to any preceding claim, wherein the switching device includes
a first switching unit (SW11) configured to enable and disable conduction between the alternating-current signal generating circuit (151) and the reference capacitor (Cref),
a second switching unit (SW12) configured to enable and disable conduction between the receiving electrode and the amplitude measuring circuit (152), and
a third switching unit (SW13) connected at one end thereof to a first node between the alternating-current signal generating circuit (151) and the first switching unit (SW11) and connected at the other end thereof to a second node between the amplitude measuring circuit (152) and the second switching unit (SW12), the third switching unit (SW13) being configured to enable and disable conduction between the first node and the second node;
in the first state, the first switching unit (SW11) and the second switching unit (SW12) are brought out of conduction, whereas the third switching unit (SW13) is brought into conduction; and
in the second state, the first switching unit (SW11) and the second switching unit (SW12) are brought into conduction, whereas the third switching unit (SW13) is brought out of conduction.

**5.** The ultrasonic apparatus according to any one of claims 1 to 4, further comprising a temperature estimating circuit (160) configured to estimate a temperature of the ultrasonic transducer (120) on the basis of a calculated electrostatic capacitance of the ultrasonic transducer (120) and a predetermined correlation between electrostatic capacitance and temperature.

## Patentansprüche

**1.** Ultraschallvorrichtung (100), die Folgendes aufweist:

einen drei Anschlüsse aufweisenden Ultraschallwandler (120) mit einer gemeinsamen Elektrode (123), einer Sendeelektrode (121) und einer von der Sendeelektrode (121) unabhängigen Empfangselektrode (122);
eine Sendeschaltung (110), die zum Ausgeben eines Ansteuersignals an die Sendeelektrode (121) zum Veranlassen des Ultraschallwandlers (120) zur Übertragung von Ultraschallwellen angeordnet ist;
eine Empfangsschaltung (140), die zum Empfangen eines Empfangssignals von der Empfangselektrode (122) angeordnet ist; und
eine Kapazitätsmessschaltung (150), die elektrisch mit der Empfangselektrode (122) verbunden ist, um eine elektrostatische Kapazität des Ultraschallwandlers (120) zu messen,
**dadurch gekennzeichnet, dass** die Kapazitätsmessschaltung (150) Folgendes beinhaltet:

eine Wechselstromsignalerzeugungsschaltung (151), die zum Erzeugen eines Wechselstromsignals einer Referenzamplitude angeordnet ist, das eine von einer Resonanzfrequenz des Ultraschallwandlers (120) verschiedene Frequenz hat,
einen Referenzkondensator (Cref), der zwischen die Wechselstromsignalerzeugungsschaltung (151) und die Empfangselektrode (122) geschaltet ist,
eine Amplitudenmessschaltung (152), die zum Messen der Spannungsamplitude des Wechselstromsignals an der Empfangselektrode (122) angeordnet ist,
eine Kapazitätsberechnungsschaltung (153), die zum Berechnen der elektrostatischen Kapazität des Ultraschallwandlers (120) angeordnet ist,
eine Schaltvorrichtung (SW13), die zum Aktivieren des Schaltens zwischen einem ersten Zustand und einem zweiten Zustand angeordnet ist, wobei der erste Zustand ein Zustand ist, in dem die Wechselstromsignalerzeugungsschaltung (151) und die Amplitudenmessschaltung (152) ohne Zwischensetzen des Referenzkondensators (Cref) verbunden sind, wobei der zweite Zustand ein Zustand ist, in dem die Wechselstromsignalerzeugungsschaltung (151) und die Amplitudenmessschaltung (152) mit dem dazwischengesetzten Referenzkondensator (Cref) verbunden sind; und
die Kapazitätsmessschaltung (153) zum Berechnen der elektrostatischen Kapazität des Ultraschallwandlers auf der Basis einer von der Amplitudenmessschaltung (152) im ersten Zustand gemessenen Amplitude und einer von der Amplitudenmessschaltung (152) im zweiten Zustand gemessenen Amplitude angeordnet ist.

**2.** Ultraschallvorrichtung nach Anspruch 1, die ferner eine Empfangsschalteinheit (SW10) aufweist, die zum Verbinden der Empfangselektrode (122) entweder mit der Empfangsschaltung (140) oder mit der Kapazitätsmessschaltung (150) angeordnet ist.

**3.** Ultraschallvorrichtung nach Anspruch 1 oder 2, die ferner eine Masseschalteinheit (SW4) aufweist, die zum Erden der Sendeelektrode (121), wenn die Kapazitätsmessschaltung (150) die elektrostatische Kapazität misst, angeordnet ist.

**4.** Ultraschallvorrichtung nach einem der vorhergehenden Ansprüche, wobei die Schaltvorrichtung Folgendes beinhaltet:

eine erste Schalteinheit (SW11), die zum Aktivieren und Deaktivieren des leitenden Zustands zwischen der Wechselstromsignalerzeugungsschaltung (151) und dem Referenzkondensator (Cref) angeordnet ist,
eine zweite Schalteinheit (SW12), die zum Aktivieren und Deaktivieren des leitenden Zustands zwischen der Empfangselektrode und der Amplitudenmessschaltung (152) angeordnet ist, und
eine dritte Schalteinheit (SW13), die an einem Ende davon mit einem ersten Knoten zwischen der Wechselstromsignalerzeugungsschaltung (151) und der ersten Schalteinheit (SW11) verbunden ist und an dem anderen Ende davon mit einem zweiten Knoten zwischen der Amplitudenmessschaltung (152) und der zweiten Schalteinheit (SW12) verbunden ist, wobei die dritte Schalteinheit (SW13) zum Aktivieren und Deaktivierung des leitenden Zustands zwischen dem ersten Knoten und dem zweiten Knoten angeordnet ist;
wobei im ersten Zustand die erste Schalteinheit (SW11) und die zweite Schalteinheit (SW12) aus dem leitenden Zustand gebracht werden, während die dritte Schalteinheit (SW13) in den leitenden Zustand gebracht wird; und im zweiten Zustand die erste Schalteinheit (SW11) und die zweite Schalteinheit (SW12) in den leitenden Zustand gebracht werden, während die dritte Schalteinheit (SW13) aus dem leitenden Zustand gebracht wird.

**5.** Ultraschallvorrichtung nach einem der vorhergehenden Ansprüche 1 bis 4, die ferner eine Temperaturschätzungsschaltung (160) aufweist, die zum Schätzen einer Temperatur des Ultraschallwandlers (120) auf der Basis einer berechneten elektrostatischen Kapazität des Ultraschallwandlers (120) und einer vorbestimmten Korrelation zwischen elektrostatischer Kapazität und Temperatur angeordnet ist.

## Revendications

**1.** Appareil à ultrasons (100) comprenant :

un transducteur à ultrasons à trois bornes (120) comprenant une électrode commune (123), une électrode de transmission (121), et une électrode de réception (122) indépendante de l'électrode de transmission (121) ;
un circuit de transmission (110) configuré pour sortir un signal d'excitation à l'électrode de transmission (121) pour faire que le transducteur à ultrasons (120) émette des ondes ultrasonores ;
un circuit de réception (140) configuré pour recevoir un signal de réception de l'électrode de réception (122) ; et
un circuit de mesure de capacité (150) connecté électriquement à l'électrode de réception (122) pour mesurer une capacité électrostatique du transducteur à ultrasons (120),
**caractérisé en ce que** le circuit de mesure de capacité (150) comprend
un circuit générateur de signal en courant alternatif (151) configuré pour générer un signal en courant alternatif d'une amplitude de référence ayant une fréquence différente d'une fréquence de résonance du transducteur à ultrasons (120),
un condensateur de référence (Cref) connecté entre le circuit générateur de signal en courant alternatif (151) et l'électrode de réception (122),
un circuit de mesure d'amplitude (152) configuré pour mesurer l'amplitude de tension du signal en courant alternatif à l'électrode de réception,
un circuit de calcul de capacité (153) configuré pour calculer la capacité électrostatique du transducteur à ultrasons (120),
un dispositif de commutation (SW13) configuré pour valider une commutation entre un premier état et un deuxième état, le premier état étant un état dans lequel le circuit générateur de signal en courant alternatif (151) et le circuit de mesure d'amplitude (152) sont connectés sans interposition du condensateur de référence (Cref), le deuxième état étant un état dans lequel le circuit générateur de signal en courant alternatif (151) et le circuit de mesure d'amplitude (152) sont connectés au condensateur de référence (Cref) interposé entre eux ; et
le circuit de calcul de capacité (153) est configuré pour calculer la capacité électrostatique du transducteur à ultrasons sur la base d'une amplitude mesurée dans le premier état par le circuit de mesure d'amplitude (152) et d'une amplitude mesurée dans le deuxième état par le circuit de mesure d'amplitude (152).

**2.** Appareil à ultrasons selon la revendication 1, comprenant en outre une unité de commutation de réception (SW10) configurée pour connecter l'électrode de réception (122) soit au circuit de réception (140) soit au circuit de mesure de capacité (150).

**3.** Appareil à ultrasons selon la revendication 1 ou 2, comprenant en outre une unité de commutation à la terre (SW4) configurée pour mettre à la terre l'électrode de transmission (121) lorsque le circuit de mesure de capacité (150) mesure la capacité électrostatique.

**4.** Appareil à ultrasons selon l'une quelconque des revendications précédentes, dans lequel le dispositif de commutation comprend
une première unité de commutation (SW11) configurée pour valider et invalider la conduction entre le circuit générateur de signal en courant alternatif (151) et le condensateur de référence (Cref),
une deuxième unité de commutation (SW12) configurée pour valider et invalider la conduction entre l'électrode de réception et le circuit de mesure d'amplitude (152), et
une troisième unité de commutation (SW13) connectée à une de ses extrémités à un premier nœud entre le circuit générateur de signal en courant alternatif (151) et la première unité de commutation (SW11) et connectée à son autre extrémité à un deuxième nœud entre le circuit de mesure d'amplitude (152) et la deuxième unité de commutation (SW12), la troisième unité de commutation (SW13) étant configurée pour valider et invalider la conduction entre le premier nœud et le deuxième noeud ;
dans le premier état, la première unité de commutation (SW11) et la deuxième unité de commutation (SW12) sont mises hors de conduction, tandis que la troisième unité de commutation (SW13) est mise en conduction ; et
dans le deuxième état, la première unité de commutation (SW11) et la deuxième unité de commutation (SW12) sont mises en conduction, tandis que la troisième unité de commutation (SW13) est mise hors de conduction.

**5.** Appareil à ultrasons selon l'une quelconque des revendications 1 à 4, comprenant un circuit d'estimation de température (160) configuré pour estimer une température du transducteur à ultrasons (120) sur la base d'une capacité électrostatique calculée du transducteur à ultrasons (120) et d'une corrélation prédéterminée entre la capacité électrostatique et la température.

FIG.1

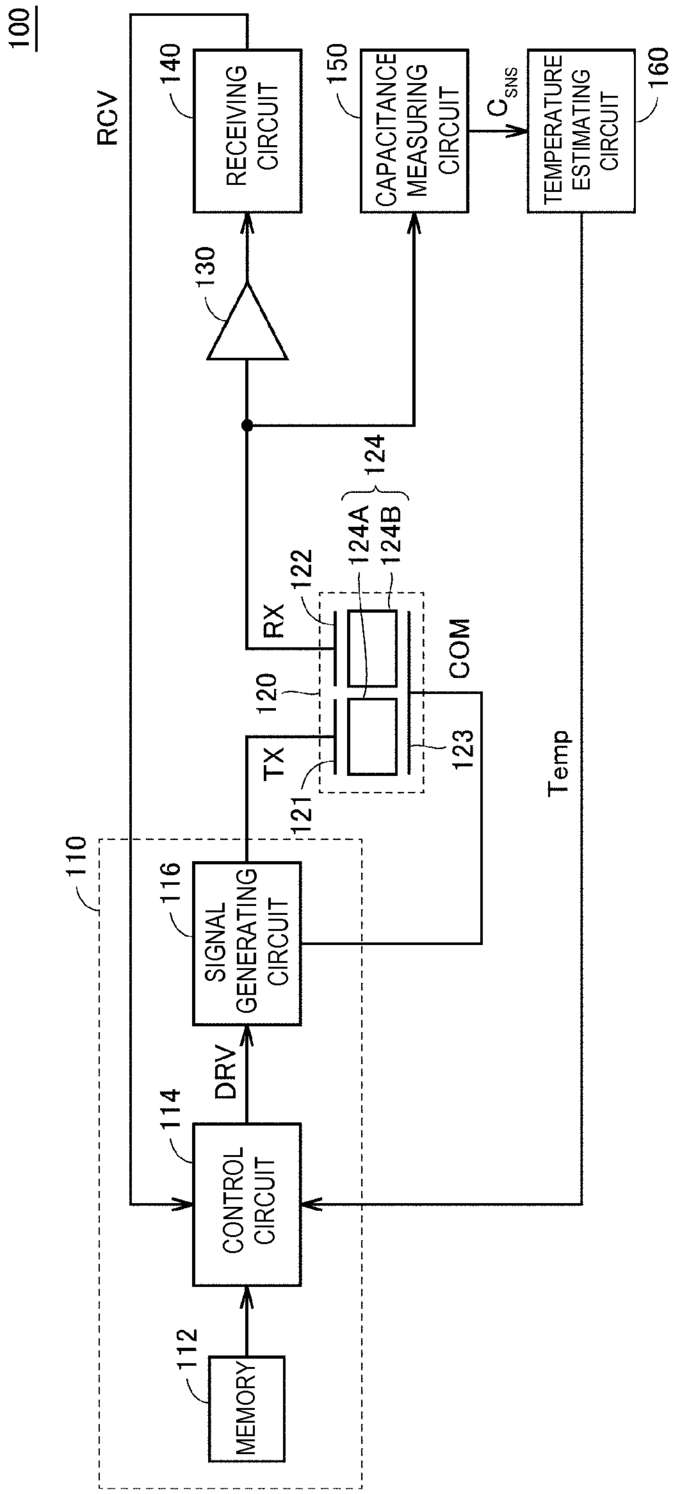
100
RCV
140
RECEIVING CIRCUIT
150
CAPACITANCE MEASURING CIRCUIT
$C_{SNS}$
TEMPERATURE ESTIMATING CIRCUIT
160
130
124
124A
124B
122
RX
COM
120
TX
121
123
Temp
110
116
SIGNAL GENERATING CIRCUIT
DRV
114
CONTROL CIRCUIT
112
MEMORY

FIG.2

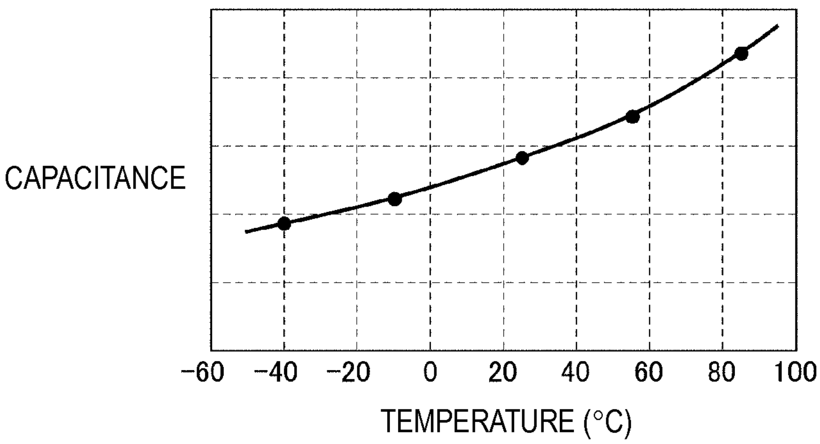
CAPACITANCE
−60
−40
−20
0
20
40
60
80
100
TEMPERATURE (°C)

FIG.3

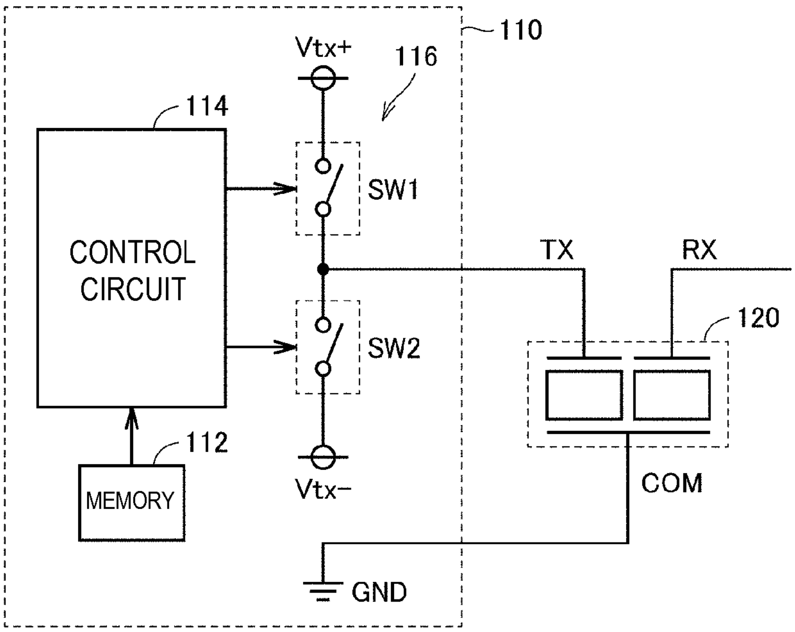
110
Vtx+
116
114
SW1
CONTROL
CIRCUIT
TX
RX
SW2
120
112
MEMORY
Vtx−
COM
GND

FIG.4

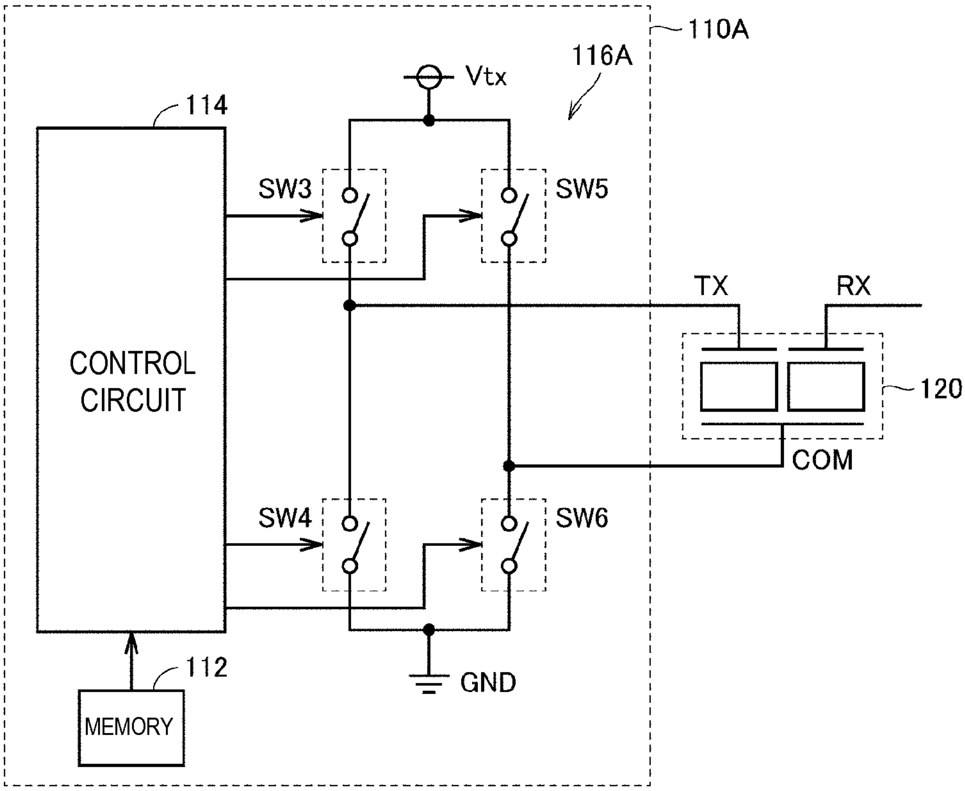
110A
116A
Vtx
114
SW3
SW5
TX
RX
CONTROL CIRCUIT
120
COM
SW4
SW6
112
GND
MEMORY

FIG.5

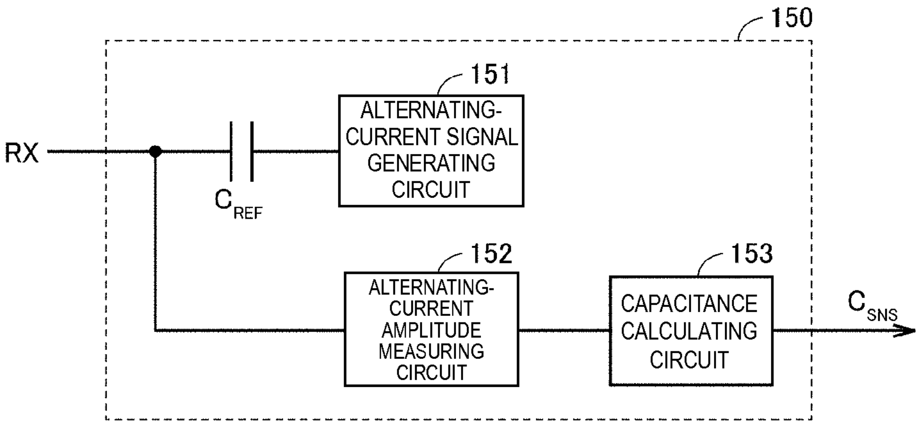
150
151
RX
ALTERNATING-CURRENT SIGNAL GENERATING CIRCUIT
$C_{REF}$
152
153
ALTERNATING-CURRENT AMPLITUDE MEASURING CIRCUIT
CAPACITANCE CALCULATING CIRCUIT
$C_{SNS}$

FIG.6

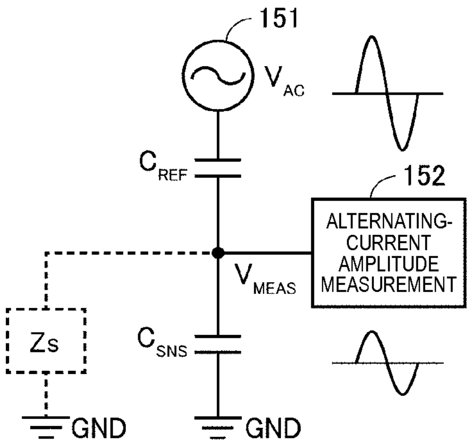


$$V_{MEAS} = \frac{\frac{1}{j\omega C_{SNS}}}{\frac{1}{j\omega C_{SNS}} + \frac{1}{j\omega C_{REF}}} \cdot V_{AC} = \frac{C_{REF}}{C_{SNS} + C_{REF}} \cdot V_{AC}$$

$$\therefore C_{SNS} = C_{REF} \cdot \left( \frac{V_{AC}}{V_{MEAS}} - 1 \right)$$

FIG.7

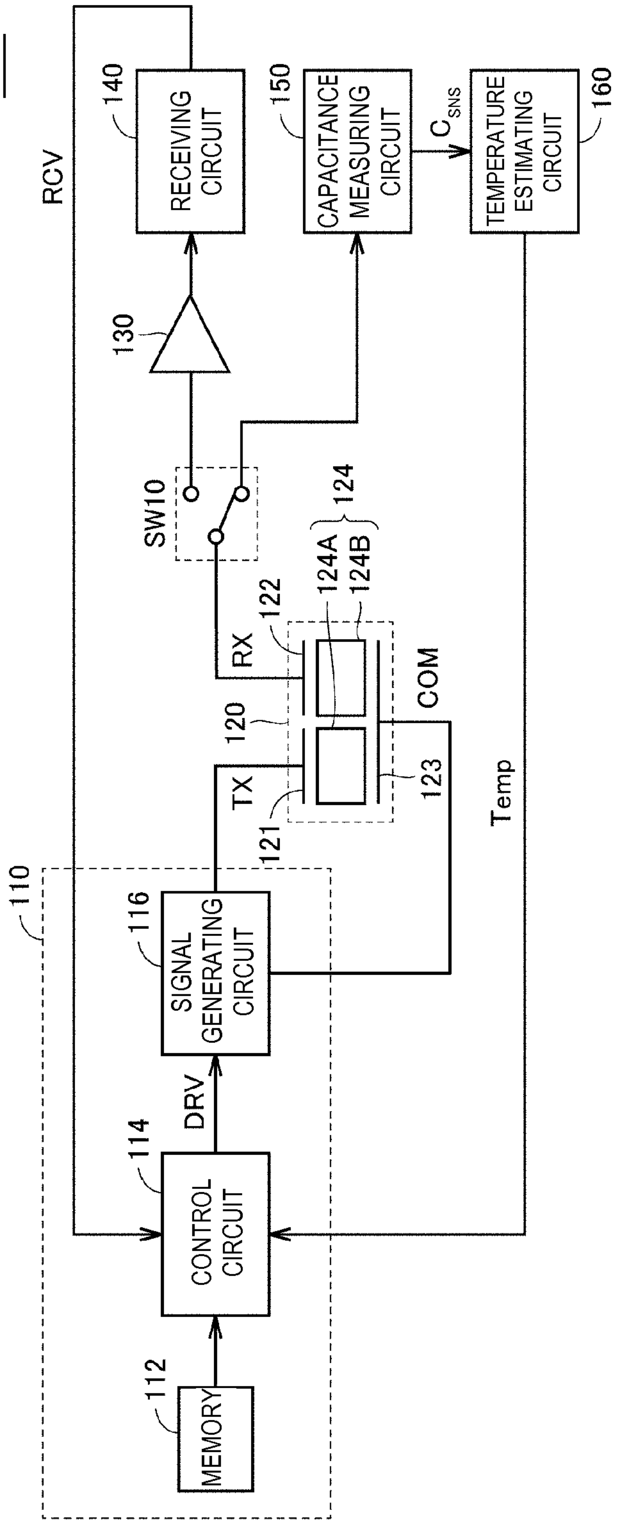
100A
RCV
140
RECEIVING CIRCUIT
150
CAPACITANCE MEASURING CIRCUIT
$C_{SNS}$
TEMPERATURE ESTIMATING CIRCUIT
160
130
SW10
124
124A
124B
122
RX
120
COM
TX
121
123
Temp
110
116
SIGNAL GENERATING CIRCUIT
DRV
114
CONTROL CIRCUIT
112
MEMORY

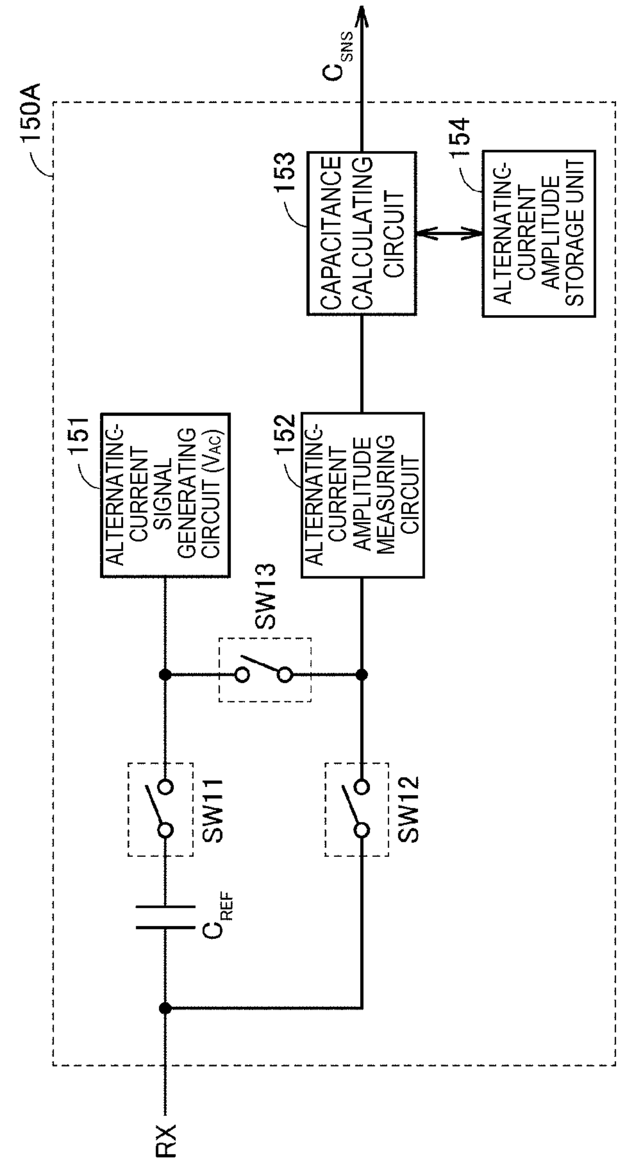
150A
151
ALTERNATING-CURRENT SIGNAL GENERATING CIRCUIT ($V_{AC}$)
152
ALTERNATING-CURRENT AMPLITUDE MEASURING CIRCUIT
153
CAPACITANCE CALCULATING CIRCUIT
154
ALTERNATING-CURRENT AMPLITUDE STORAGE UNIT
$C_{SNS}$
SW11
SW12
SW13
$C_{REF}$
RX

FIG.8

FIG.9

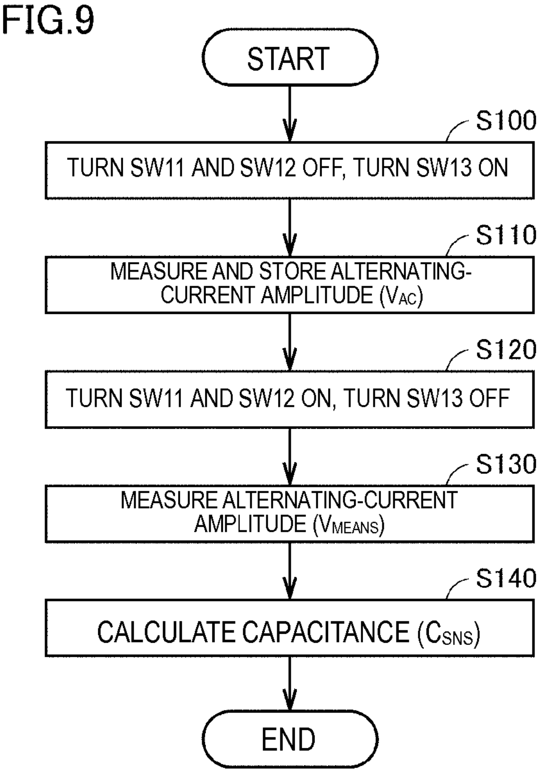
START
S100
TURN SW11 AND SW12 OFF, TURN SW13 ON
S110
MEASURE AND STORE ALTERNATING-CURRENT AMPLITUDE ($V_{AC}$)
S120
TURN SW11 AND SW12 ON, TURN SW13 OFF
S130
MEASURE ALTERNATING-CURRENT AMPLITUDE ($V_{MEANS}$)
S140
CALCULATE CAPACITANCE ($C_{SNS}$)
END

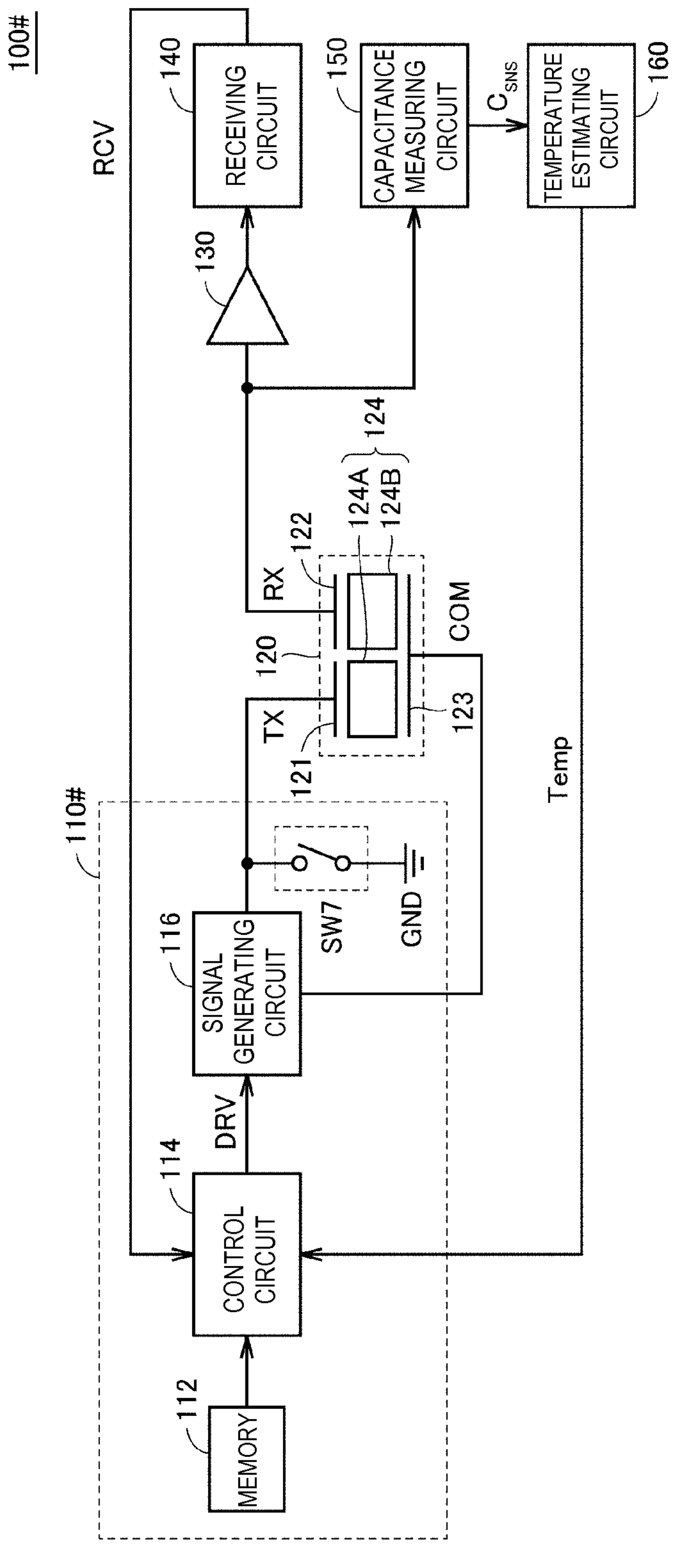
100#
110#
112
MEMORY
114
CONTROL CIRCUIT
DRV
116
SIGNAL GENERATING CIRCUIT
SW7
GND
TX
121
120
RX
122
123
124A
124B
124
COM
130
140
RECEIVING CIRCUIT
RCV
150
CAPACITANCE MEASURING CIRCUIT
$C_{SNS}$
160
TEMPERATURE ESTIMATING CIRCUIT
Temp

FIG.10

FIG.11

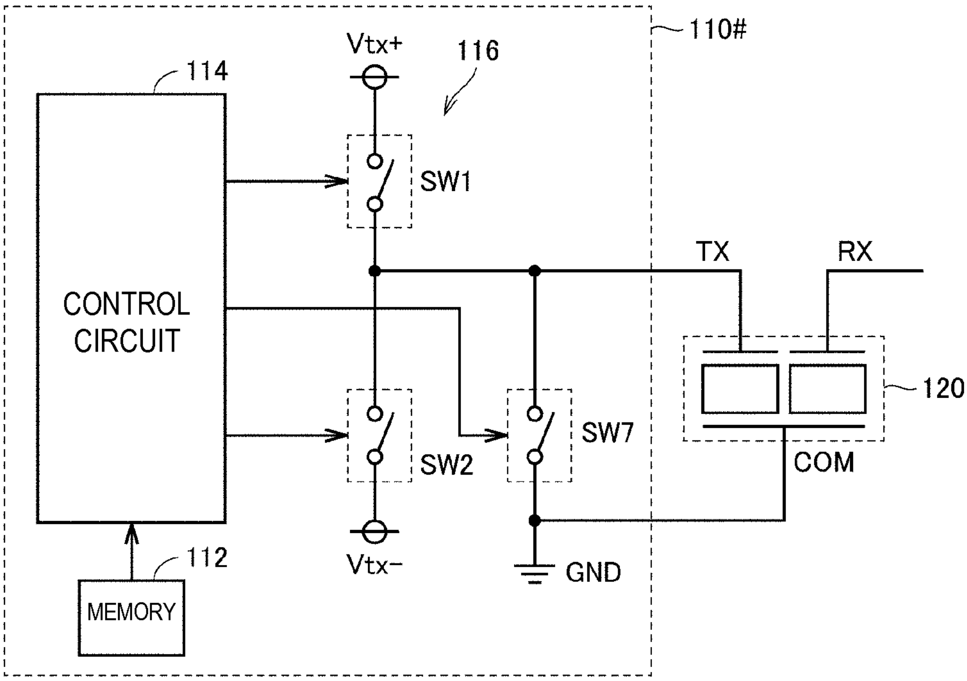
110#
114
116
Vtx+
SW1
CONTROL CIRCUIT
TX
RX
120
SW2
SW7
COM
Vtx−
GND
112
MEMORY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61270685 A
- JP 2012217012 A
- WO 2016167003 A
- JP H11150959 B
- JP S61270685 B
- DE 3538964